# EUROPÄISCHE PATENTSCHRIFT

(11) **EP 1 501 652 B1**
(45) Veröffentlichungstag und Bekanntmachung des Hinweises auf die Patenterteilung: **16.08.2006**
(21) Anmeldenummer: 03704278.5
(22) Anmeldetag: 31.01.2003
(51) Int. Cl.: B23D 49/16, B23D 51/16

(54) **HANDSTICHS GEMASCHINE**
HAND-HELD SABER SAW
SCIE SAUTEUSE MANUELLE

(30) Priorität: 01.03.2002 DE 10208867
(43) Veröffentlichungstag der Anmeldung: 02.02.2005
(73) Patentinhaber: ROBERT BOSCH GMBH, 70442 Stuttgart (DE)
(72) Erfinder: ZEITER,Olivier, CH-3951 Agarn (CH); SAEGESSER, Daniel, CH-4900 Langenthal (CH)
(86) Internationale Anmeldenummer: PCT/DE2003/000275
(87) Internationale Veröffentlichungsnummer: WO 2003/074219

(56) Entgegenhaltungen:
- DE-A- 19 925 750
- GB-A- 1 377 552
- US-A- 2 695 522
- US-A- 5 020 606
- US-A- 5 755 293
- US-B1- 6 256 891

## Beschreibung

### Stand der Technik

Die Erfindung geht aus von einer Handstichsägemaschine mit Gleichstrommotor nach dem Oberbegriff des Anspruchs 1.

Eine solche Vorrichtung ist aus GB 2 234 034 A bekannt.

Es ist schon eine Handstichsägemaschine mit Gleichstrommotor bekannt, bei der das Getriebegehäuse und Getriebe einer handelsüblichen, mit Wechselstrom betreibbaren Handstichsägemaschine mit einem Gleichstrommotor gekuppelt ist, wobei das Getriebeeingangsritzel über ein einstückiges Kupplungsteil mit der Motorwelle des Gleichstrommotors drehfest gekuppelt ist. Diese Kupplung ist verhältnismäßig unelastisch und daher empfindlich gegen Parallelitätsabweichung der Motor- zur Getriebeachse. Wegen der erforderlichen hohen Fluchtungsgenauigkeit ist die bekannte Akku-Handstichsägemaschine verhältnismäßig teuer bzw. empfindlich gegen Stoß oder Schlag, d.h. gegen eine ungewollte Lageveränderung des Motors.

### Vorteile der Erfindung

Die vorliegende Handstichsägemaschine mit Gleichstrommotor mit den Merkmalen des Anspruchs 1 hat den Vorteil, dass der Gleichstrommotor bezüglich dem Getriebe bzw. gegenüber dem Getriebeeingangsritzel besonders grob tolerierbar angeordnet werden kann und unempfindlich gegen Stoß oder Schlag ist.

Dadurch, dass ein Motorgehäuse für den Gleichstrommotor an ein Standardstichsägengehäuse für Netzbetrieb montierbar ist, entfallen die Entwicklungskosten zur Schaffung eines speziellen Getriebes und Getriebegehäuses für Gleichstrombetrieb.

Dadurch, dass das Motorgehäuse, insbesondere an seinem Ende, auswechselbar ein Akku-Paket lösbar trägt, ist eine kostengünstige, unabhängig vom Stromnetz betreibbare Handstichsäge geschaffen.

Dadurch, dass das überbrückende Kupplungsritzel quasi kardanisch mit dem Wellende des Motors kuppelbar ist, arbeitet die Handstichsägemaschine auch bei erheblicher Schieflage des Gleichstrommotors gegenüber dem Getriebeeingangsritzel.

Dadurch, dass das Kupplungsritzel als elastisches Kunststoffteil ausgestaltet ist, insbesondere als radial verformbare Hülse, wirkt sie stoß- und geräuschdämpfend bei der Kraftübertragung zwischen dem Gleichstrommotor und dem Getriebeeingangsritzel.

Dadurch, daß zwischen dem Kupplungsteil und dem Kupplungsritzel quasi ein Gelenk gebildet wird, sind auch bei Winkellagen des Motors zum Getriebe hohe Drehmomente und Drehzahlen ohne Probleme übertragbar.

### Zeichnungen

Nachstehend ist die Erfindung anhand eines Ausführungsbeispiels mit zugehöriger Zeichnung erläutert.

Es zeigen
Figur 1 einen Längsschnitt einer erfindungsgemäßen Stichsäge,
Figur 2 eine Explosionsdarstellung des Motors mit der Kupplung und dem Getriebe der erfindungsgemäßen Stichsäge,
Figur 3 eine Explosionsdarstellung gemäß Figur 2 mit montiertem Kupplungsteil und
Figur 4 einen Längsschnitt gemäß Figur 1 ohne Gehäuse.

### Ausführungsbeispiele

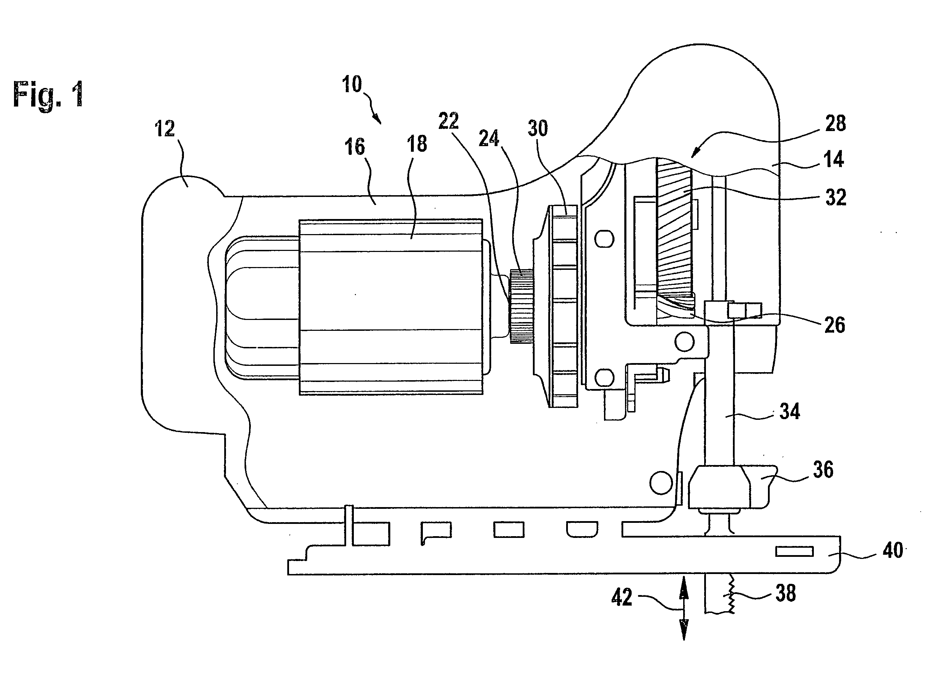

Die in Figur 1 gezeigte Handwerkzeugmaschine ist als Handstichsägemaschine 10 ausgestaltet, die über ein Akku-Paket 12 bzw. über Gleichstrom mit Energie versorgbar ist. Sie besteht aus einem Getriebegehäuse 14, an das ein Motorgehäuse 16 angeflanscht ist. Das Motorgehäuse 16 trägt an seinem Ende ein Akku-Paket 12 und nah benachbart zu diesem einen schwingungsgedämpft gelagerten Gleichstrommotor 18, dessen Motorwelle am Wellenende 22 über eine mehrstückige Kupplung 24 mit einem Getriebeeingangsritzel 26 eines herkömmlichen Stichsägemaschinengetriebes 28 gekuppelt ist.

Die Kupplung 24 trägt eine Ventilator 30, der der Motorkühlung bzw. der Blaslufterzeugung zum Wegblasen von Spänen dient, die sich beim Sägen von Werkstücken auf deren Oberfläche sammeln und die Kontrolle des Sägevorgangs erschweren.

Das Stichsägegetriebe 28 besteht aus einem großen Abtriebsritzel 32, dessen Drehbewegung über ein nicht dargestelltes Kulissengetriebe in eine Auf- und Abbewegung einer nach unten aus dem Getriebegehäuse 14 ragenden Hubstange 34 umgewandelt wird. Die Hubstange 34 trägt an ihrem unteren, freien Ende eine Spanneinrichtung 36, mit der ein Stichsägeblatt 38 mit großer Haltekraft an der Hubstange 34 festhaltbar ist.

Das Stichsägeblatt 38 durchragt nach unten eine Fußplatte 40 und wird beim Sägen entsprechend dem Bewegungspfeil 42 auf und ab bewegt. Bei Betätigung des nicht dargestellten Einschalters wird die Drehbewegung des Motors über die Kupplung 24 auf das Getriebeeingangsritzel 26 übertragen und bewirkt, elastisch gedämpft durch die Kupplung 24 die des Sägeblatt- bewegung.

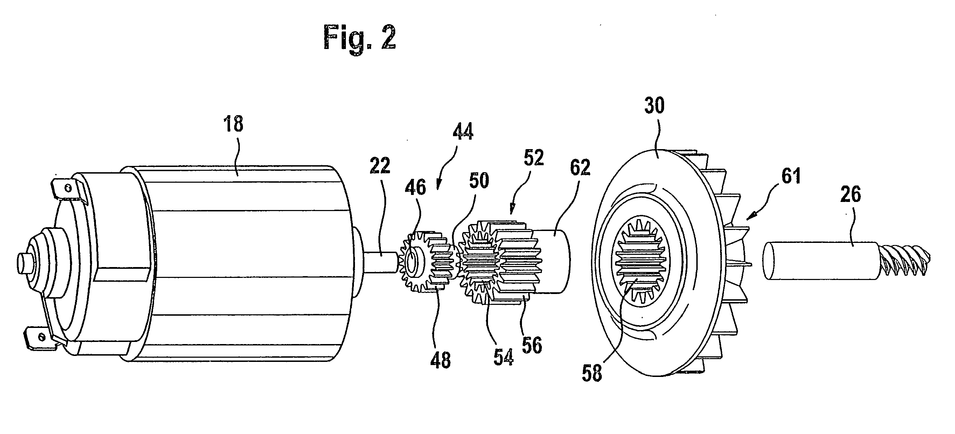

Figur 2 zeigt die Explosionsdarstellung des Gleichstrommotors 18 und das Wellenende 22, das nach rechts aus dem gekapselten Motor 18 herausragt. Dem Wellenende 22 ist ein zahnwellenartiges Kupplungsteil 44 zugeordnet. Dieses hat eine zentrale Bohrung 46, die auf das Wellenende 22 pressbar ist und dieses kraftschlüssig drehfest umgreift. Das Kupplungsteil 44 trägt eine Außenverzahnung 48, die als Normverzahnung mit Flankenwinkel 30° ausgeführt ist. Außerdem trägt das Kupplungsteil 44 an seiner dem Motor 18 abgewandten Stirnseite eine axial vorstehenden, glatten Zentrierbund 50. In Betrachtungsrichtung rechts, benachbart zum Kupplungsteil 44 ist ein Kupplungsritzel 52 angeordnet, in dessen hohlrad- bzw. zahnnabenartige Innenverzahnung 54 die Außenverzahnung 48 des Kupplungsteils 44 mit minimalem Spiel drehmitnehmend eingreift.

Das Kupplungsritzel 52 ist innen und außen als Stufenzylinder ausgestaltet und trägt au-ßen auf seinem größeren Durchmesserbereich eine Außenverzahnung 56 zum formschlüssigen Eingriff in eine hohlradartige Innenverzahnung 58 des Ventilators 30. Diese sind als Normverzahnung mit Flankenwinkel 30° ausgeführt.

Die Innenverzahnung 58 des Ventilators 30 geht stufenartig in eine kleinere, nicht dargestellte Bohrung über, die ein glattes Zentrierstück 62 des Kupplungsritzels 52 kraftschlüssig umgreift und damit den Ventilator 30 relativ zum Kupplungsritzel 52 zentriert.

Auch die Innenverzahnung 54 des Kupplungsritzels 52 geht in eine nicht dargestellte kleinere Bohrung über, in die das hintere, glattzylindrische Ende des Getriebeeingangsritzels 26 kraftschlüssig einpressbar ist.

Wird das Kupplungsritzel 52 gemeinsam mit dem Ventilator 30 vollständig in Eingriff mit dem auf dem Wellenende 22 drehfest sitzenden Kupplungsteil 44 gebracht, kann ein hohes Drehmoment auf das Getriebeeingangsritzel 26 erfolgen, das zentrisch und drehfest im dem Motor abgewandten Bereich des Kupplungsritzels 52 sitzt. Da Kupplungsteil 44 und Kupplungsritzel 52 aus Kunststoff bestehen und besonders elastisch sind, können verhältnismäßig grobe Winkeltoleranzen zwischen der Motorachse 18 und der Achse der Getriebeeingangswelle 26 bei der Herstellung und Montage des Motorgehäuses bzw. des Motors 18 hingenommen werden.

Der Ventilator 30 hat eine zentrale Stufenbohrung 61, deren größerer Durchmesser kraftschlüssig mit dem Kupplungsritzel 52 in Eingriff bringbar ist und deren kleiner, glatter Durchmesser kraftschlüssig zentrierend das glatte Zentrierstück 62 des Kupplungsritzels 52 übergreift, wenn der Ventilator auf das Kupplungsritzel 52 aufgepresst ist. In der bestimmungsgemäßen Position nach der Montage des Ventilators 60 auf das Kupplungsritzel 52 ragt das Kupplungsritzel 52 mit seiner Außenverzahnung 56 in Betrachtungsrichtung nach links aus dem Ventilator 60 hinaus.

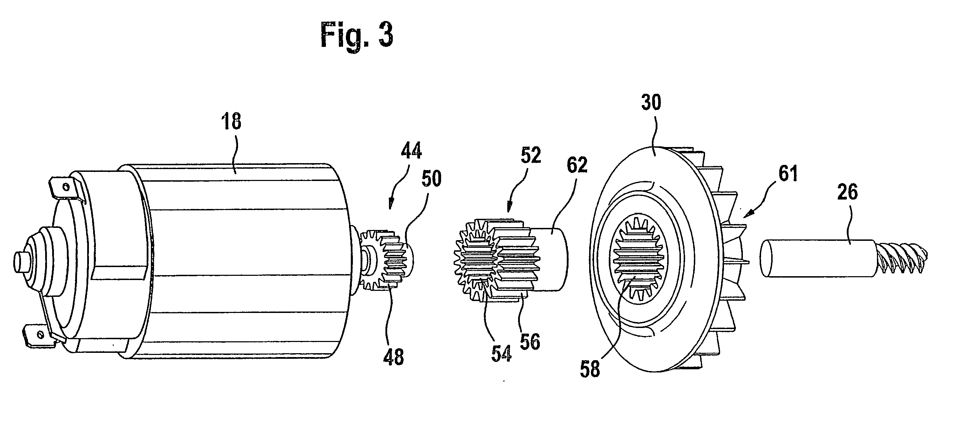

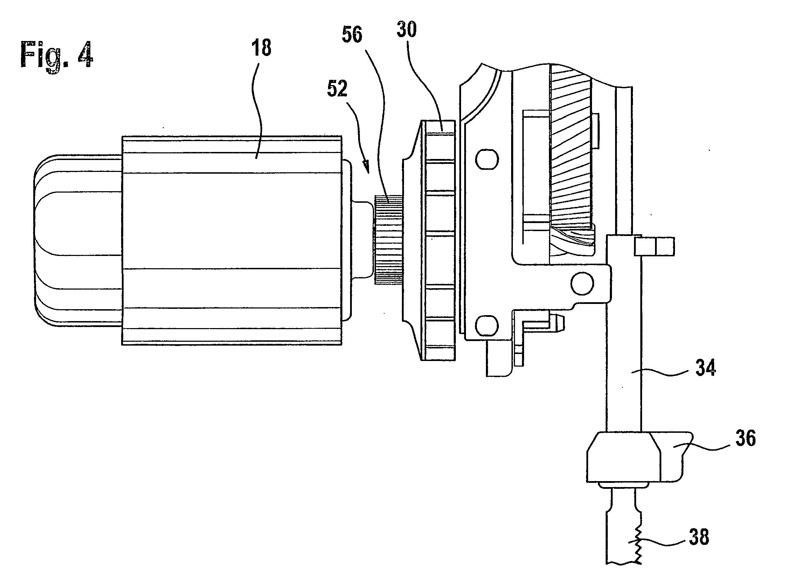

Die Figuren 3 und 4 zeigen die Einzelheiten der zuvor beschriebenen Figuren in ähnlicher Ansicht und dienen der Verdeutlichung der Erfindung, ohne nochmals die Einzelheiten aufzuführen.

## Patentansprüche

1. Handstichsägemaschine (10) mit einem ein gemeinsames festes Gehäuse bildenden Motor- und einem Getriebegehäuse (16, 14), die einen akkubetriebenen Gleichstrommotor (18) mit einer Motorwelle mit Wellenende (22) sowie ein mit diesem drehangetrieben verbundenes - an sich bei Stichsägen bekanntes - Getriebe (28) aufnehmen, dessen Getriebeeingangsritzel (26) die Drehung des Motorwellenendes (22) in eine Auf- und Abbewegung einer ein Sägeblatt (38) tragenden Hubstange (34) umwandelt, **dadurch gekennzeichnet, dass** das Getriebe (28) und sein Getriebegehäuse (14) von einer mit Wechselstrom betreibbaren Stichsäge stammen und dass zwischen dem Wellenende (22) des Gleichstrommotors (18) und dem Getriebeeingangsritzel (26) eine zur Drehmomentübertragung drehfest angeordnete mehrstückige Kupplung (24) aus voneinander leicht lösbaren, insbesondere axial ineinander einsteckbaren, Teilen besteht, wobei die Kupplung (24) ein zahnwellenartiges Kupplungsteil (44) aufweist, das auf seiner motorseitigen Stirnseite drehfest mit dem Wellenende (22) der Motorwelle kuppelbar ist und zusammen mit einem Kupplungsritzel (52) eine Zahnwellen-/Zahnnabenverbindung bildet.

2. Handstichsägemaschine nach Anspruch 1, **dadurch gekennzeichnet, daß** die Kupplung (24) einen Ventilator (30) trägt.

3. Handstichsägemaschine nach Anspruch 1, **dadurch gekennzeichnet, dass** die Kupplung (24) über einen Zentrierbund (50) des Kupplungsteils (44) durch dessen Eingriff in eine entsprechende Gegenbohrung des Kupplungsritzels (52) zentrierbar ist, wobei das Kupplungsritzel (52) auf seiner dem Kupplungsteil (44) abgewandten Seite drehfest mit dem Getriebeeingangsritzel (26) verbindbar ist.

4. Handstichsägemaschine nach Anspruch 3, **dadurch gekennzeichnet, dass** das hülsenartige Kupplungsritzel (52) außen als Stufenzylinder ausgestaltete ist, der auf seinem größeren Durchmesserbereich eine Außenverzahnung (56) trägt und auf seinem kleineren Durchmesserbereich ein glattes Zentrierstück (62) bildet, wobei der Ventilator (30) mit einer passenden Stufenbohrung diesem Stufenzylinder zugeordnet ist.

5. Handstichsägemaschine nach Anspruch 4, **dadurch gekennzeichnet, daß** die Stufenbohrung des Ventilators (30) aus einer größeren Bohrung mit Innenverzahnung (58) und aus einer glatten, kleineren Bohrung besteht, die der Außenverzahnung (56) und dem glatten Zentrierstück (62) des Kupplungsritzels (52) zugeordnet ist.

6. Handstichsägemaschine nach Anspruch 5, **dadurch gekennzeichnet, dass** die Außenverzahnung (48) des Kupplungsteils (44) und die Innenverzahnung (54) des Kupplungsritzels (52) Normverzahnungen mit Flankenwinkel 30° sind.

7. Handstichsägemaschine nach einem der vorhergehenden Ansprüche, **dadurch gekennzeichnet, dass** hinten am Motorgehäuse (16) ein Akku-Paket (12) auswechselbar, insbesondere abnehmbar und unverlierbar angeordnet ist.

8. Handstichsägemaschine nach einem der vorhergehenden Ansprüche, **dadurch gekennzeichnet, dass** das Kupplungsritzel (52) ein elastisches Kunststoffteil ist, durch Anpassung von dessen Einzeltoleranzen Fluchtungsfehler zwischen Motor (18) und Getriebe (28) ausgleichbar sind.

9. Handstichsägemaschine nach einem der vorhergehenden Ansprüche, **dadurch gekennzeichnet, dass** die Außenverzahnung (56) des Kupplungsritzels (52) und die Innenverzahnung (58) des Ventilators (30) Normverzahnungen mit Flankenwinkel 30° sind.

10. Handstichsägemaschine nach einem der vorhergehenden Ansprüche, **dadurch gekennzeichnet, dass** der Motor (18) elastisch im Motorgehäuse (16) gelagert ist.

## Claims

1. Portable jigsaw (10) comprising a motor housing (16) and a gear housing (14) which form a common fixed housing and accommodate a battery-operated direct-current motor (18), having a motor shaft with shaft end (22), and a gear (28) which is connected to the latter in a rotationally driven manner and is known per se in jigsaws and whose gear input pinion (26) converts the rotation of the motor shaft end (22) into an up and down movement of a stroke rod (34) carrying a saw blade (38), **characterized in that** the gear (28) and its gear housing (14) originate from a jigsaw which can be operated with alternating current, and **in that**, between the shaft end (22) of the direct-current motor (18) and the gear input pinion (26), a multi-piece coupling (24) arranged in a rotationally fixed manner for the transmission of torque consists of parts which can be easily released from one another and in particular can be inserted axially into one another, the coupling (24) having an external-spline-like coupling part (44) which, on its motor-side end face, can be coupled in a rotationally fixed manner to the shaft end (22) of the motor shaft and forms together with a coupling pinion (52) an external/internal spline connection.

2. Portable jigsaw according to Claim 1, **characterized in that** the coupling (24) carries a fan (30).

3. Portable jigsaw according to Claim 1, **characterized in that** the coupling (24) can be centred via a centring collar (50) of the coupling part (44) by the engagement of said centring collar (50) in a corresponding mating bore of the coupling pinion (52), it being possible for the coupling pinion (52), on its side facing way from the coupling part (44), to be connected in a rotationally fixed manner to the gear input pinion (26).

4. Portable jigsaw according to Claim 3, **characterized in that** the sleeve-like coupling pinion (52) is designed on the outside as a stepped cylinder which has an external tooth system (56) on its larger diameter region and forms a smooth centring piece (62) on its smaller diameter region, the fan (30) being assigned with a matching stepped bore to this stepped cylinder.

5. Portable jigsaw according to Claim 4, **characterized in that** the stepped bore of the fan (30) consists of a larger bore having an internal tooth system (58) and of a smooth, smaller bore which are assigned to the external tooth system (56) and the smooth centring piece (62) of the coupling pinion (52).

6. Portable jigsaw according to Claim 5, **characterized in that** the external tooth system (48) of the coupling part (44) and the internal tooth system (54) of the coupling pinion (52) are standard tooth systems with a flank angle of 30°.

7. Portable jigsaw according to one of the preceding claims, **characterized in that** a rechargeable battery pack (12) is arranged at the rear on the motor housing (16) in an interchangeable manner, in particular in a removable and captive manner.

8. Portable jigsaw according to one of the preceding claims, **characterized in that** the coupling pinion (52) is an elastic plastic part, and alignment errors between motor (18) and gear (28) can be compensated for by adaptation of the individual tolerances of said coupling pinion (52).

9. Portable jigsaw according to one of the preceding claims, **characterized in that** the external tooth system (56) of the coupling pinion (52) and the internal tooth system (58) of the fan (30) are standard tooth systems with a flank angle of 30°.

10. Portable jigsaw according to one of the preceding claims, **characterized in that** the motor (18) is mounted elastically in the motor housing (16).

## Revendications

1. Scie sauteuse manuelle (10) comprenant un boîtier de moteur et un boîtier d'engrenage (16, 14) formant un boîtier fixe commun logeant un moteur à courant continu (18), qui fonctionne sur accumulateur et comprend un arbre moteur avec son extrémité d'arbre (22), ainsi qu'un engrenage (28) - connu en soi pour des scies sauteuses - relié à celle-ci en rotation et dont le pignon d'entrée (26) transforme la rotation de l'extrémité d'arbre moteur (22) en un mouvement ascendant et descendant d'une tige de piston (34) portant une lame de scie (38),
**caractérisée en ce que**
l'engrenage (28) et son boîtier (14) font partie d'une scie sauteuse pouvant fonctionner en courant alternatif, et entre l'extrémité d'arbre (22) du moteur à courant continu (18) et le pignon d'entrée d'engrenage (26) un couplage (24) en plusieurs pièces fixe en rotation, qui transmet le couple de rotation est composé de pièces, facilement amovibles pouvant en particulier être emboîtées axialement les unes dans les autres, le couplage (24) présentant une pièce de couplage (44) de type arbre cannelé qui, sur sa face frontale côté moteur, peut être accouplée fixe en rotation à l'extrémité (22) de l'arbre moteur et forme conjointement avec un pignon de couplage (52) une liaison arbre cannelé/moyeu cannelé.

2. Scie sauteuse manuelle selon la revendication 1,
**caractérisée en ce que**
le couplage (24) porte un ventilateur (30).

3. Scie sauteuse manuelle selon la revendication 1,
**caractérisée en ce que**
le couplage (24) peut être centré par un collet de centrage (50) de la pièce de couplage (44) par l'engagement de celui-ci dans un alésage antagoniste correspondant du pignon de couplage (52), le pignon de couplage (52), sur sa face opposée à la pièce de couplage (44), pouvant être relié fixe en rotation au pignon d'entrée d'engrenage (26).

4. Scie sauteuse manuelle selon la revendication 3,
**caractérisée en ce que**
le pignon de couplage (52) de type douille présente extérieurement la forme d'un cylindre étagé qui porte sur la zone de son plus grand diamètre une denture extérieure (56) et sur la zone de son plus petit diamètre une pièce de centrage (62) lisse, le ventilateur (30) étant associé à ce cylindre étagé au moyen d'un alésage étagé correspondant.

5. Scie sauteuse manuelle selon la revendication 4,
**caractérisée en ce que**
l'alésage étagé du ventilateur (30) est composé d'un alésage plus grand à denture intérieure (58) et d'un alésage lisse plus petit associé à la denture extérieure (56) et à la pièce de centrage (62) lisse du pignon de couplage (52).

6. Scie sauteuse manuelle selon la revendication 5,
**caractérisée en ce que**
la denture extérieure (48) de la pièce de couplage (44) et la denture intérieure (54) du pignon de couplage (52) sont des dentures normalisées ayant un angle de flanc de 30°.

7. Scie sauteuse manuelle selon l'une quelconque des revendications précédentes,
**caractérisée en ce qu'**
à l'arrière du boîtier de moteur (16) un paquet d'accumulateurs (12) est disposé de manière interchangeable, en particulier amovible et imperdable.

8. Scie sauteuse manuelle selon l'une quelconque des revendications précédentes,
**caractérisée en ce que**
le pignon de couplage (52) est une pièce en matière plastique élastique, l'adaptabilité des tolérances propres à celle-ci permettant de compenser des défauts d'alignement entre le moteur (18) et l'engrenage (28).

9. Scie sauteuse manuelle selon l'une quelconque des revendications précédentes,
**caractérisée en ce que**
la denture extérieure (56) du pignon de couplage (52) et la denture intérieure (58) du ventilateur (30) sont des dentures normalisées ayant un angle de flanc de 30°.

10. Scie sauteuse manuelle selon l'une quelconque des revendications précédentes,
**caractérisée en ce que**
le moteur (18) est logé élastiquement dans le boîtier de moteur (16).
